# EUROPEAN PATENT APPLICATION

(11) **EP 1 686 348 A1**
(43) Date of publication of application: **02.08.2006**
(21) Application number: 04766974.2
(22) Date of filing: 08.10.2004
(51) Int. Cl.: G01B 11/12, G01B 11/25, G01N 21/954

(54) **OPTICAL METROLOGY METHOD WHICH IS USED TO DETERMINE THE THREE-DIMENSIONAL TOPOGRAPHY OF A HOLE**

(30) Priority: 10.10.2003 ES 200302355
(71) Applicant: Universitat Politecnica de Catalunya, 08034 Barcelona (ES)
(72) Inventor: LAGUARTA BERTRAN, Ferran, E-08034 Barcelona (ES); ARTIGAS PURSALS, Roger, E-08034 Barcelona (ES); CADEVALL ARTIGUES, Cristina, E-08034 Barcelona (ES)
(74) Representative: Morgades y Manonelles, Juan Antonio
(86) International application number: PCT/ES2004/000436
(87) International publication number: WO 2005/036098

(57) **Abstract**

An optical metrology method for conical orifices according to the invention consists in arranging the object having the orifice under a microscope with the greater diameter opening facing illumination means and centring it in the field of view of observation means and bringing it into focus using wide-field illumination on the smaller diameter opening so as to measure its diameter and major defects. Subsequently, the focus plane is changed and the contour of the orifice is measured by projecting a sequence of patterns measuring the position of the points along the contour of the orifice when the images of the projected pattern and their reflection on the inner walls of the orifice are superimposed on the plane of the camera of the apparatus. The method is repeated and the data describing the contours measured in different planes are processed to obtain a three-dimensional geometrical representation and the characteristic parameters of the inner topography of the orifice.

## Description

The present invention relates to an optical metrology method for determining the three-dimensional topography of an orifice (particularly for measuring micrometric, tapered nozzles and similar devices). It also relates to a measuring apparatus for carrying out this procedure, whose novel features provide numerous advantages, as explained in the present specification.

The method and apparatus of the present invention are of particular, but not exclusive, applicability in the measurement of the micrometric orifices in the nozzles of inkjet print heads.

Operating of inkjet printers is based essentially upon ejection of drops of liquid ink through nozzles in their injector heads. These droplets hit the paper and form the necessary points that make up images and text. The print head includes a flexible circuit that comprises a thin plate and nozzle array through which a precise amount of ink is ejected in the correct direction to land on the printing surface of the paper.

One of the main objects of the quality control processes to which manufacturers currently subject inkjet printers is the determination of the configuration or topography of the nozzle orifices of the print heads, through which the ink is ejected towards the paper. The aforementioned thin plate that forms the flexible circuit of the print head may be manufactured from several materials. One of these materials is the Dupont Corporation's Kapton®, which is made up of flexible polyamide films. The mechanical strength of these films is considerable, they have remarkable chemical and electrical properties and they are also highly resistant to extreme temperatures. Other dielectric and semiconductor materials represent further possibilities.

Orifices in the plate are three-dimensional and in the shape of a truncated cone. They are very small in size, and increasingly so, in order to provide greater accuracy and resolution when printing. Their small size makes it necessary to position them with precision on the plate of the circuit plate in order to provide the desired printing quality.

The plate of the flexible circuit, which, as previously described, is located in the print head, is positioned at a given distance from the paper (considerably farther away in comparison to the size of the plate nozzles). An erroneous orifice configuration can thus alter the ink droplet path after its ejection from the injector head orifice, which should be perpendicular to the paper, and could thus distort the image or text to be printed.

The precision required, together with the ever-decreasing diameters of the orifices on the plates in the print head (of the order of 25 micrometres or less), makes it difficult to measure and control the quality of the print heads with rigour and precision.

Several attempts have been made to devise techniques for measuring the dimensions of the outlet orifices of the nozzles in inkjet print heads, although a number of disadvantages have meant that none of these techniques have as yet proved to be effective. One of these techniques consists in using confocal profilometers, which analyse the retroreflected or backscattered light on the surface of a sample. A confocal profilometer is a confocal microscope that scans a surface with a laser. The device, which employs a technique called CLSM (Confocal Laser Scanning Microscopy), projects a single point of focused light onto the surface to be measured using a scanner that sweeps a given plane of the surface.

The main disadvantage of these devices is that due to the specific three-dimensional shape of the orifices, which must necessarily be tapered and whose inner surface must be optically polished for optimum printing quality, they have a high level of uncertainty. This is principally the result of the absence of retroreflected light due to the steep angle of the surface (the angles of incidence are greater than 70°) and the fact that the surface is optically polished. This means that there is practically no retroreflected or backscattered light, so no information is provided on the position of the surface to be measured. Furthermore, a significant additional drawback of this state of the art measuring technique is that it is extremely slow (more than 20 seconds for each) and difficult to apply to the measurement of steep walls.

The present invention provides an optical metrology method for determining three-dimensional topographies. The method is particularly applicable to the measurement of the inner surface of the outlet orifices of inkjet print heads, although it is not limited to this application. It is an optical system that does not come into contact with the object being analysed and functions on the basis of the light reflected by the object, as will be explained further on.

The invention also refers to the apparatus used to carry out the procedure, which includes illumination and observation means, details of which will be provided further on in this report.

According to the present invention, in order to carry out this optical metrology method used for determining the three-dimensional topography of an orifice, in particular for measuring that of micrometric, tapered nozzles and other similar devices, the following steps have to be carried out:
Firstly, an initial calibration is performed. This should be carried out periodically. The aim is to check whether the image plane for the illumination means coincides with the object plane for the observation means.

The object to be analysed is set out on a microscope slide, with the greatest diameter opening facing the illumination means. One of the orifices of the object to be analysed is centred on the field of view of the observation means and then brought into focus by means of an autofocus procedure using wide-field illumination on the smallest diameter opening. At this point, the diameter of the orifice and major defects, such as the absence of an orifice or large-scale deformation, are measured.

An axial displacement to a focus plane inside the orifice is then performed. Using a pattern representation system, which is part of the illumination means, a sequence of patterns is projected onto the focus plane, such as a circular pattern with increasing radius. The images of the patterns projected onto the inside of the orifice by the pattern representation system are observed by means of cameras, such as CCD or CMOS cameras, which are part of the observation means. The positions of the points along the contour of the orifice are measured when the image of the projected circular pattern and its reflection on the inner surface of the orifice (virtual image of the pattern) are superimposed on the camera.

This process is repeated for a given number of planes inside the orifice and the measurements of the contours for the different planes are then processed to obtain a three-dimensional geometric representation of the inner topography of the orifice and the characteristic parameters of the orifice, such as its maximum and minimum diameter, the slope of the wall of the orifice, deviations from the design, position of the axis of the orifice, etc.

Preferably, the coordinate system should be a cylindrical coordinate system of a resolution of 360-720 dots measured in each plane along the length of the contour of the orifice, although a Cartesian coordinate reference system may also be used.

The method of the invention provides for acquisition of a series of images (one for each of the patterns projected), for example, from 10 to 25 images, to obtain the points of the inner contour of the orifice.

Once the contour has been measured for a given plane, the focus plane of the orifice should be changed, by moving the object that is being analysed axially, for example. For the new focus plane, the process is repeated in order to measure the contour of the orifice of the object being analysed using a coordinate system. Several images are acquired in order to obtain the measured points of the contour of the orifice from the images acquired for the different projected patterns.

The focus plane may be modified by moving the object upwards, for example. In one embodiment of the invention, the focus plane of the object can be altered as many times as necessary to obtain a range of values for different planes of the nozzle. The distance between the different focus planes should range from 1 to 10 µm.

The parameters used to characterise the topography of the orifice (maximum and minimum diameter of the orifice, slope of the wall of the orifice, deviations in the shape, position and angle of the axis, etc.) are obtained by properly processing the measurements (the contours in the different focus planes), which may be circles, or even ellipses in the event of the deviation of the axis of the orifice from the optical axis of the measuring system. This is carried out by computer processing means, using algorithms that provide a set of values corresponding to the said parameters.

The apparatus of the invention is adapted to carry out the previously described method. The method allows determining with a remarkable accuracy the three-dimensional topography of micrometric, optically polished tapered orifices.

The apparatus of the invention, which was used to carry out said measuring method, essentially comprises illumination means, observation means and computer processing means.

The illumination means of the apparatus of the invention comprises a microscope objective, a light source, a pattern representation system, an optical system and, if necessary, a mirror, which may be adapted to deflect the light beam an angle of, for example, 90°, although it may also be tilted at a different angle depending on the spatial configuration of the apparatus of the invention.

The observation means of the apparatus comprises a microscope objective, an optical system and at least one CCD or CMOS camera.

The computer processing means comprises a computer and the appropriate software, which includes the algorithms needed for the three-dimensional reconstruction of the object being analysed after the method of the invention is carried out. The software calculates the points needed to construct the inner topography of the orifice, provides the user interface (selection of the number of points, etc.) and controls the various parts of the apparatus (such as motorized displacement stages, etc.).

The illumination means has a 100X SLWD (super-long working distance) objective, whilst that of the observation means is a 50X SLWD objective for a 1/3" format CCD camera. The magnification of the objectives may vary depending on the format of the CCD camera and the characteristics of the orifice to be analysed.

A computer, which is part of the computer processing means, controls the pattern representation system. It allows to both visualize a wide-field illumination and to generate patterns, such as circular patterns of circles of different diameters. The patterns are projected using the said objectives and optical systems onto the inner surface of the orifice to be analysed.

According to one embodiment, said pattern representation system is a liquid crystal microdisplay (LCD), although it could also be a liquid-crystal-on-silicon (LCOS) microdisplay with a light beam splitter associated therewith providing a better image quality, as it would prevent the dark areas that result from the electronics involved in each pixel from appearing on the image of the projected pattern, as is the case with liquid crystal microdisplays.

The light source emits a broadband spectrum of light; LEDs or a white light source may be used. Alternatively, it is possible to employ a laser illumination system and a scanner to generate the pattern inside the orifice.

The apparatus and the method to be carried out by said apparatus according to the invention is not limited to measuring orifices in the shape of truncated cones. For example, it is possible to determine the topography of a partially tapered orifice having, in addition, a structure in the greater diameter opening, such as a prism shaped recess. Determining said topography is carried out by providing an additional camera in the apparatus, for example, of the CCD type.

The features and advantages of the method and the apparatus of the present invention will be clear from the detailed description of the three preferred embodiments thereof which will be given hereinafter by way of non limitative example with reference to the accompanying drawings, in which:
Fig. 1 shows a diagrammatic depiction of a first embodiment of an optical metrology apparatus for determining the three-dimensional topography of an orifice according to the invention, used in particular to measure micrometric, tapered and other similar nozzles in the flexible circuits of print heads in inkjet printers;
Fig. 2 shows a diagrammatic depiction of a second embodiment of an optical metrology apparatus according to the invention;
Fig. 3 shows a diagrammatic depiction of a third embodiment of the invention;
Figs. 4 and 5 are partial cross-sections of two examples of the various possible topographies that the apparatus is able to measure with the method of the invention;
Fig. 6 is a diagrammatic drawing showing the method of the invention in a condition in which the whole incident beam is propagated through the orifice without being reflected on the inner surface of the orifice;
Fig. 7 is a diagrammatic drawing similar to that in Fig. 6, in which, due to the higher value of the radius of the projected pattern on the focus plane, a part of the incident beam is propagated directly though the orifice and another part is reflected onto its inner surface, which results in two images of the pattern on the camera plane.
Fig. 8 is a diagrammatic drawing, similar to those in above Figs. 6 and 7, in which the radius of the projected pattern onto the focus plane coincided with the radius of the inner contour of the orifice on the same plane, which results in a single image of the pattern on the camera plane.
Fig. 9 is a diagrammatic drawing, similar to those in Figs. 6, 7 and 8, in which the radius of the projected pattern onto the focus plane is greater than the radius of the inner contour of the orifice analysed on the same plane, which also results in a single image of the pattern on the camera plane.
Figure 10 is a graph showing, for a series of images, the value of the radius of the circular projected pattern on the focus plane and also the radius of the virtual circular pattern associated with the part of the incident beam that is reflected onto the inner surface of the orifice.

A list of the various references used to describe the embodiments carried out on the apparatus of the present invention follows:
(1) illumination means;
(2) observation means;
(3) computer processing means;
(4) microscope objective associated with the illumination means;
(5) light source;
(6) liquid-crystal pattern representation system located in the position of the illumination system's field diaphragm;
(7) mirror;
(8) optical system associated with the illumination means;
(9) microscope objective associated with the observation means;
(10) optical system associated with the observation means;
(11) CCD camera;
(12) computer;
(13) nozzle;
(13a) nozzle;
(14) flexible circuit plate;
(14a) flexible circuit plate;
(15) microscope slide;
(16) pattern representation system (LCOS);
(17, 17') beam splitters;
(18) CCD camera;
(19) nozzle recess;
(rₒ) radius of the nozzle on the focus plane;
(P) circular light pattern projected on the focus plane by the illumination means;
(O) end points of the section of the light pattern;
(r) radius of the circular light pattern projected on the focus plane;
(I) image of the pattern on the plane of the camera formed by the part of the light beam that is propagated directly through the nozzle;
(R) radius of the image of the pattern on the CCD camera plane;
(O') end points of the section of the virtual light pattern;
(r') radius of the virtual light pattern on the focus plane;
(I') image of the virtual pattern on the plane of the camera formed by the part of the light beam that is reflected on the inner surface of the nozzle;
(R') radius of the image of the virtual pattern on the CCD camera plane;
(A, B) end points that determine the radius of the nozzle on the focus plane;
(B) centre of the circular pattern projected on the focus plane;
(B') centre of the images of the pattern on the camera plane;
(zᵢ) focus planes; and
(S) point of intersection.

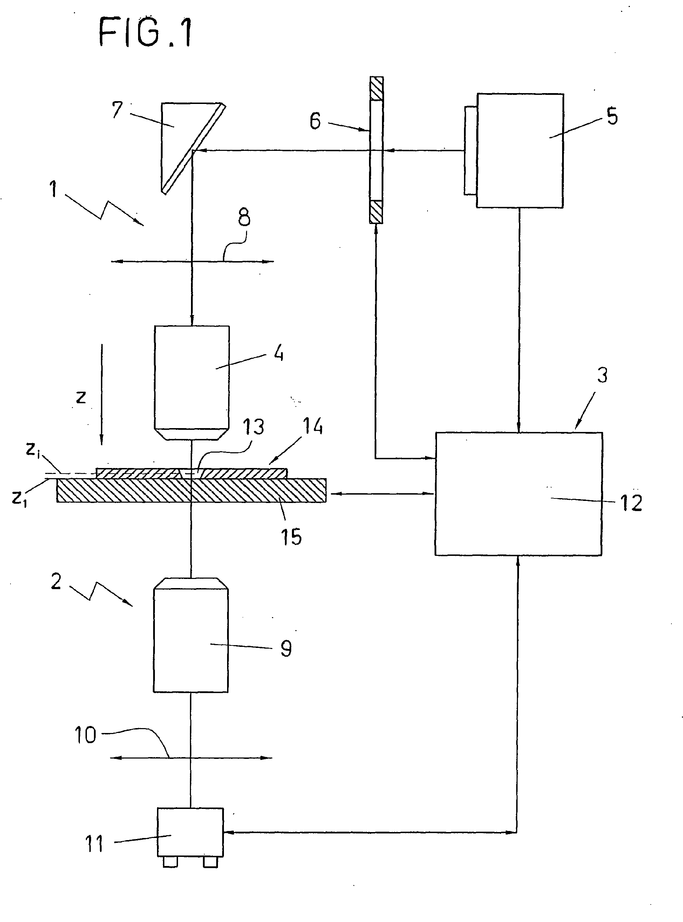

Referring to the embodiment in Fig. 1, there is shown diagrammatically a first example of a measuring apparatus comprising illumination means (1), observation means (2) and computer processing means (3).

The illumination means (1) comprises a high-magnification objective (4) (100X SLWD), a white light source (5), a pattern representation system (6) located in the position of the field diaphragm, a mirror (7), which in the embodiment shown deflects the light beam 90°, and an optical system (8).

The observation means (2) comprises a microscope objective (9) of 50X SLWD magnification, an optical system (10) and a CCD camera (11), which could also be a CMOS camera.

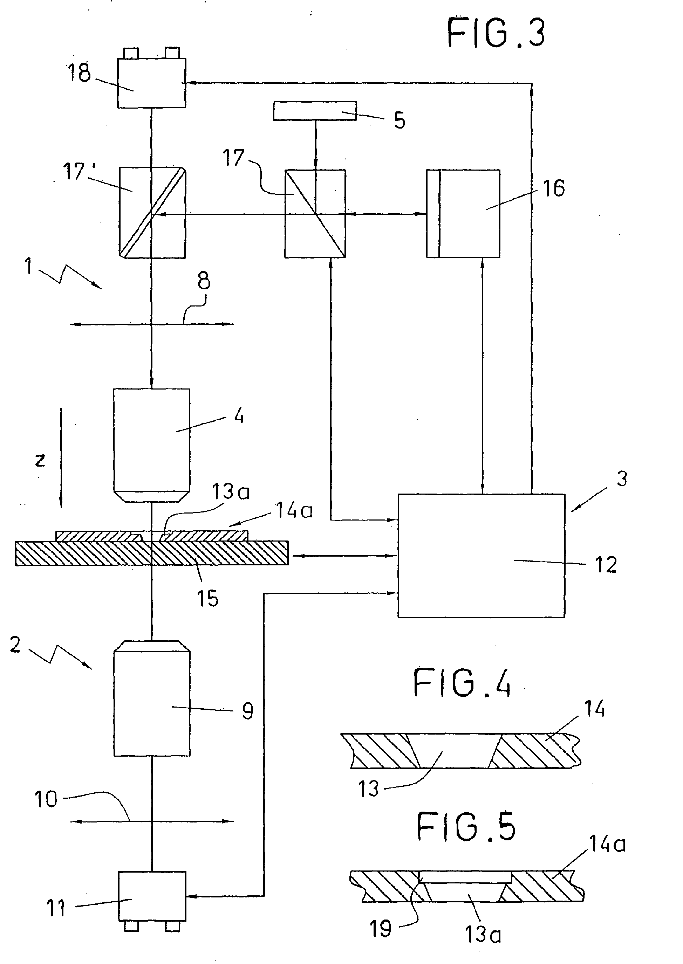

The computer processing means (3) comprises a computer (12) running the appropriate software and the algorithms needed to measure the contours on different planes and to reconstruct, in three dimensions, the tapered nozzle (13) of the object being analysed (14) after following the method of the invention. The shape of the nozzle (13) can be seen in the partial cross-section in Fig. 4 of the drawings attached in the present specification.

In the example shown in said Fig. 1, the object being analysed is a flexible circuit (14) of the kind used in inkjet print heads, which includes a number of orifices or nozzles (13) of a highly reduced size. By way of example, a plate (14) being 50 µm thick with nozzles (13) whose walls are tilted 17° and having an outlet opening with a diameter of approximately 25 µm for ejecting microdroplets of ink may be analysed.

The liquid-crystal pattern representation system (6) is controlled by said computer (12) of the computer processing means (3) and it enables a wide-field illumination (when the pattern representation system (6) is completely open) and also generates circular patterns of different diameters. These patterns are projected onto the inner surface of the nozzle (13) using the optical system (8) and the microscope objective (4).

According to the method of the invention, the object being analysed (14), that is, the flat, flexible plate having a number of tapered nozzles (13), is fixed horizontally to the base of the microscope slide (15) with the wider opening of the nozzles (14) facing the illumination means.

The illumination means (1) and the observation means (2) of the measuring apparatus are adjusted and calibrated so that the image plane for the illumination means (1) coincides with the object plane for the observation means (2).

Once the flexible plate (14) to be analysed has been placed and fastened on the microscope slide (15), various steps are performed according to the method of the invention which are described in detail below.

With a wide-field illumination (that is, with the pattern representation system (6) completely open), the apparatus centres one of the nozzles (13) on the field of view and focuses on the (z₁) plane that corresponds to the narrow opening of the nozzle. This step can be used to find significant defects (such as the absence of nozzles (13)) and to quickly measure the shape and the diameter of the narrow opening of the nozzle (13) of the plate (14).

The apparatus moves the plate (14) that is being analysed downward, as shown in Figs. 1, 2 and 3 so as to focus on the (z₂) plane, which is located inside the nozzle. In this new plane, (z₂), the position of the points along the contour of the nozzle is measured (13), either using a cylindrical coordinate system or a Cartesian coordinate system. In a cylindrical coordinate system, a resolution of 360-720 points measured along the length of the contour of the nozzle (13) is preferred; this corresponds to an angular sampling of 1 - 0.5°, though these parameters could be different according to the requirements of the analysis.

To obtain the points along the contour of the nozzle (13) the apparatus acquires a series of images (between 10 and 25) for a variety of patterns of circular forms of varying diameters displayed by the pattern representation system (6) and projected in the (z₂) plane by the optical system (8) and the microscope objective (4).

The images of the patterns inside the nozzle are observed using the CCD camera (11).

The information contained in these images is processed using the computer (12) with the corresponding algorithms, and a set of values is obtained that corresponds to said coordinates. The measurement of the position of the points along the contour of the nozzle (13) is carried out when the image of the projected circular pattern and its reflection on the inner surface of the orifice are superimposed.

The apparatus then moves the plate to be analysed (14) to the next plane (z₃) and the process is repeated fifty times for the example of the embodiment implementation described (plate (14), 50 µm thick), that is, the sampling of the structure of the nozzle (13) is carried out in fifty focus or test planes (z₁, ..., z₅₀), with a spacing between planes (zᵢ-zᵢ₊₁) of 1 µm, even though those skilled in the art will understand that the number of focus planes in the sample could vary based on the thickness of the plate (14) and on the requirements of the parameters of analysis. The apparatus thus acquires the topography of the inner surface of the nozzle (13) plane by plane (z₁, ...zᵢ, ...zₙ) . From said topography, the apparatus is capable to obtain the output data required for the nozzle (13): diameter (maximum and minimum), slope of wall, deviations from the nominal figure, position of the axis, etc.).

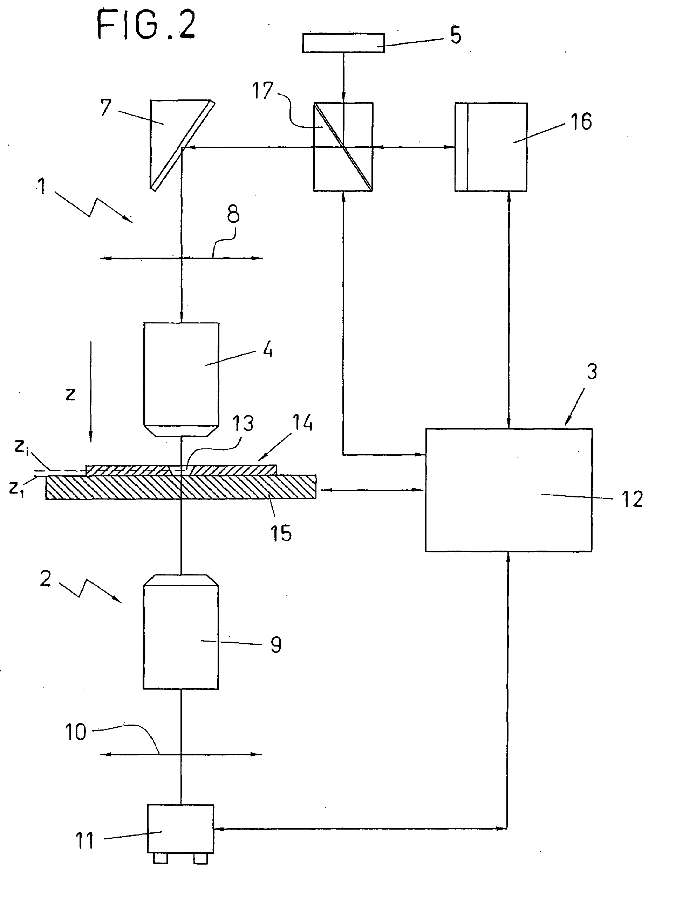

In the embodiment shown in Fig. 2, the apparatus uses a pattern representation system of a higher quality. This is a system that uses liquid crystal on silicon (LCOS) (16) associated with a light beam splitter (17) that receives light emitted from the source (5). The remaining parts and operation are essentially the same as in the embodiment shown in Fig. 1.

The apparatus according to the third embodiment, which is diagrammatically shown in Fig. 3, allows the measurement of nozzles (13a) in a truncated cone shape with a prism shaped recess (19), as shown in the enlarged, partial cross-section in Fig. 5. This recess may be used to hold the electronics needed for operation of the flexible circuit (14a) provided in an inkjet print head. As it can be seen from Fig. 3, the apparatus is also provided with a liquid crystal on silicon (LCOS) pattern representation system (16) associated with the light beam splitter (17), the remaining parts and operation being essentially the same as in the embodiment shown in Fig. 2. Nevertheless, in this embodiment the mirror (7) has been replaced with another beam splitter to allow the observation and topographical measurement of the area of the recess (19) of the nozzle (13a) with an additional camera (18), such as a CCD camera. It will be, however, understood that to measure this topography, which is shown in Fig. 5 (as well as other, different topographies) the pattern representation system (6) shown in the embodiment in Fig. 1 may also be used.

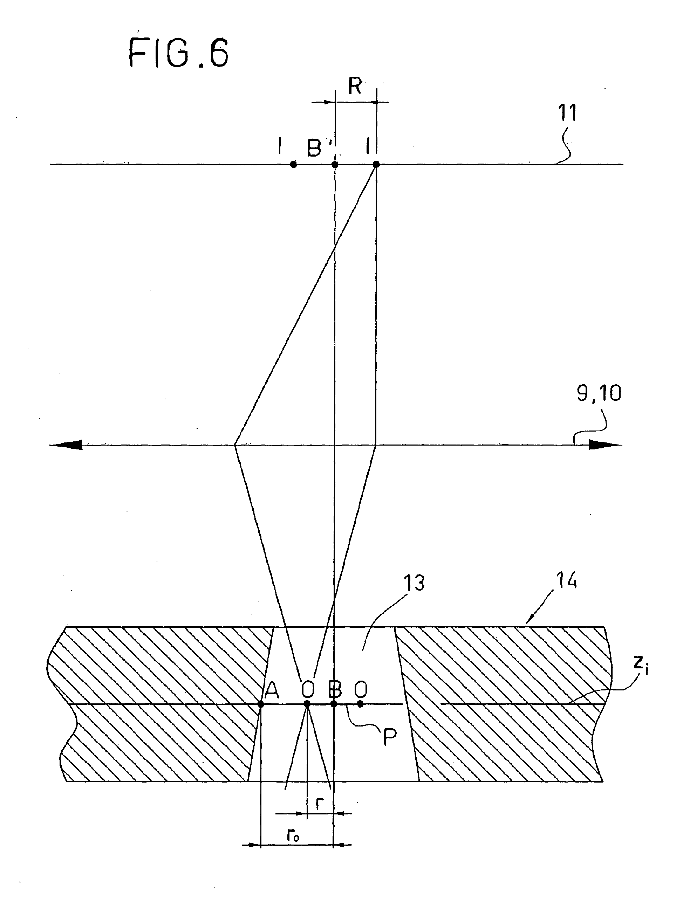

The basic concepts underlying the invention are shown in Figs. 6 to 10 included in the present specification.

Through the illumination means (1), a circular pattern (P) defined by the (0-O) line is projected on a focus plane (zᵢ) located inside the nozzle (13). The beam from the illumination means enters the nozzle (13) through the greater diameter opening (lower half of Figs. 6 to 9).

In the case of Fig. 6, the radius (r) of pattern (P) projected by the illumination means (1) on the focus plane (zᵢ) inside the nozzle (13) is such that the entire incident beam is propagated through the orifice without undergoing any reflection off its inner surface. As a result, an image (I-I) of the pattern (P) on the plane of the camera (11) is obtained, whose radius (R) is equal to the radius of the pattern (r) multiplied by the magnification ratio of the objective (9) and the optical system (10).

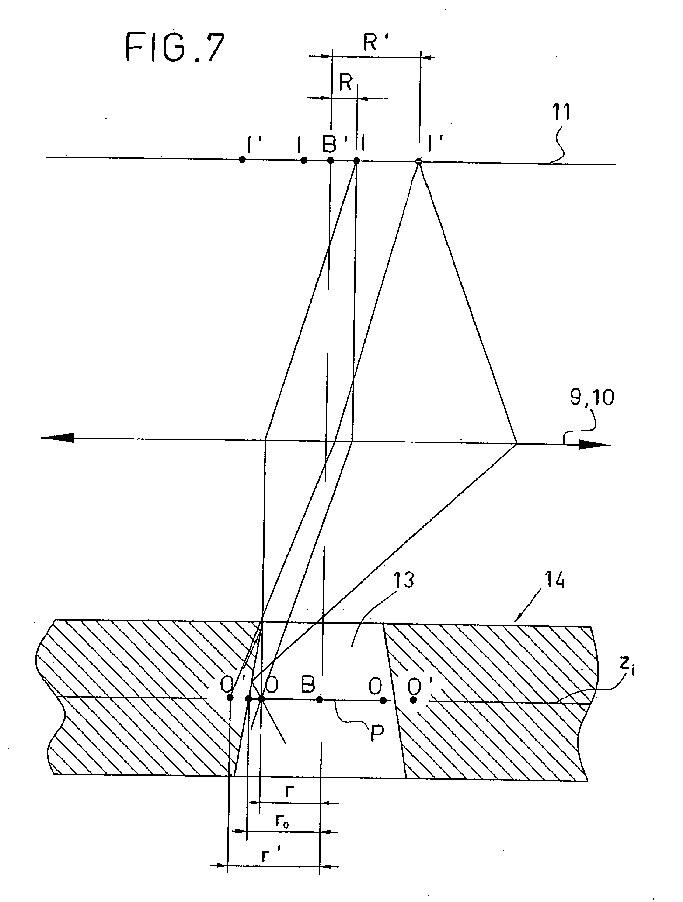

Figs. 7 to 9 show conditions in which the radius (r) of the circular pattern (P) projected on the focus plane (zᵢ) is progressively increased.

In the case of Fig. 7, the radius (r) of the pattern (P) projected by the illumination means (1) on the focus plane (zᵢ) inside of the nozzle (13) is such that part of the incident beam is propagated directly through the orifice and another part is reflected off its inner surface. As a result, two images (I-I) and (I'-I') are obtained on the plane of the camera (11). The image (I-I) of radius (R) corresponds to the real circular pattern (O-O) of radius (r), whereas the image (I'-I') of radius (R') corresponds to the virtual pattern (O'-O') of radius (r'). The respective radii (R) and (R') are equal to the radius of the real pattern (r) and that of the virtual pattern (r') multiplied by the magnification ratio of the objective (9) and the optical system (10). As the radius (r) of pattern (P) is increased, radius (R) will increase, and radius (R') will decrease.

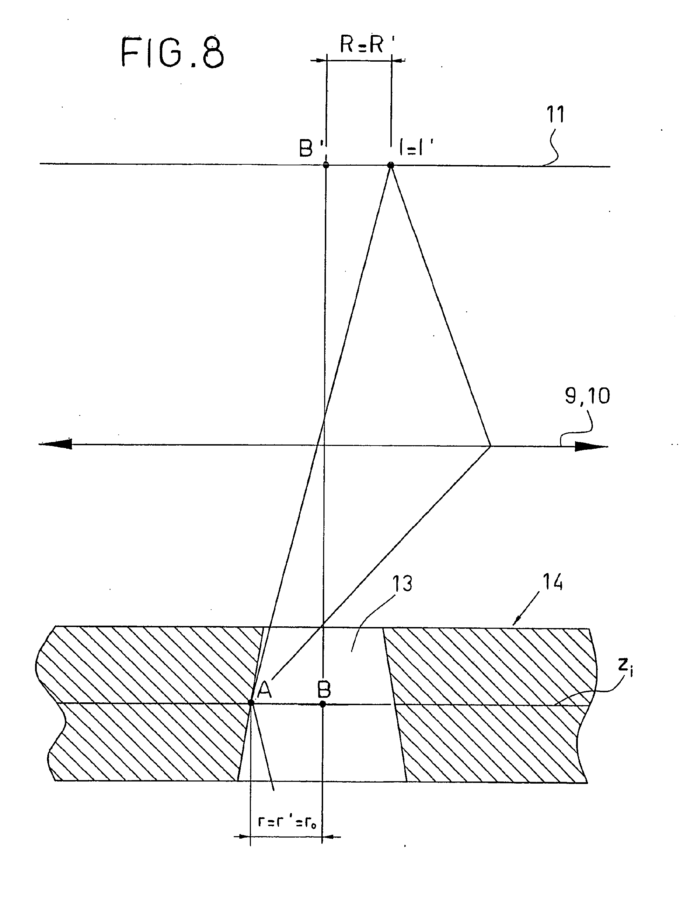

In the example shown in Fig. 8, the radius (r) of pattern (P) projected by the illumination means (1) on the focus plane (zᵢ) inside the nozzle (13) is such that it coincides with the radius of the contour of the nozzle (r₀). As a result, the images (I-I) and (I'-I') are superimposed atop one another and the respective radii (R) and (R') are equal.

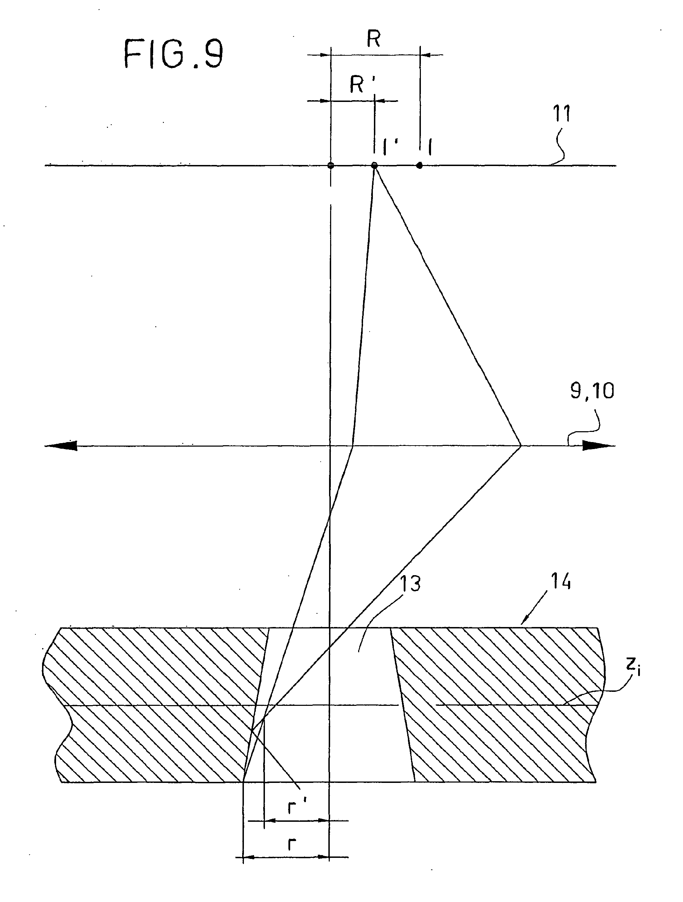

In the example shown in Fig. 9, the radius (r) of the pattern (P) projected by the illumination means (1) on the focus plane (zᵢ) inside the nozzle (13) is greater than the radius of the contour of the nozzle (r₀). As a result, the entire incident beam is reflected off the inner surface of the nozzle (13) and only one image (I'-I') of radius (R') that corresponds to the virtual pattern of radius (r') is observed on the plane of the camera (11).

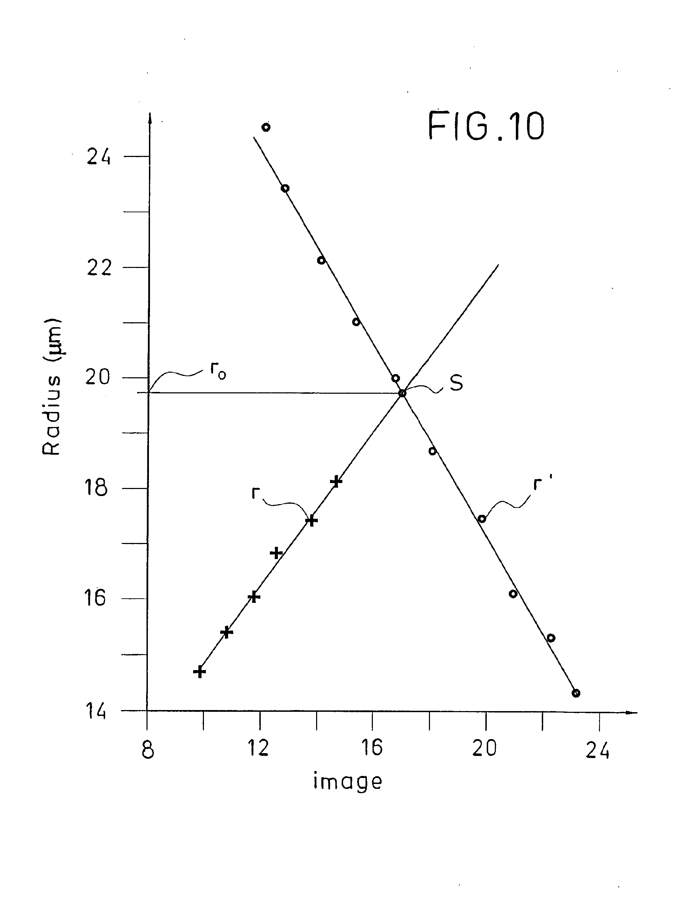

By ascertaining the superimposing condition of the images (I) and (I') [(R)=(R')] it is possible to find the radius (r₀) of the nozzle (13) on the focus plane (zᵢ) for a given angular coordinate, according to the graph shown in Fig. 10. In said Fig. it can be seen that as the radius (r) of the projected pattern (P) on the series of images increases, the radius (r') of the virtual pattern decreases, until it converges into the point of intersection (s), whose value on the coordinate axis corresponds to the radius (rₒ) of the orifice on the focus plane for the corresponding angular coordinate of the contour of the nozzle.

The method used in the invention is extremely quick; it has been demonstrated a data acquisition and processing time when measuring the contour of the nozzle close to 1s for each plane (zᵢ). Results can be said to be extremely effective, as an extraordinary precision was achieved. Tests conducted provided an estimated uncertainty of approximately 2%, with an angular deviation of Δθ= ± 0.5°, a deviation on the axis (z) of Δz= ± 0.1 µm for nozzles with taper angles of approximately 17°, and a deviation on the axis (z) of Δz= ± 0.15 µm for nozzles with taper angles of approximately 12°.

Even though Figs. 1 to 3 show different embodiments of the apparatus of the invention with the illumination means (1) in the upper part of the microscope slide (15) and the observation means (2) in the lower part of the slide, it will be understood that the arrangement of the parts in the apparatus could be otherwise. For example, they could be inverted, with the illumination means (1) in the lower part and the observation means (2) in the upper part of the microscope slide (15).

The method used in the invention, as described herein, is used in the quality control step on a production line, for the manufacture of items such as flexible circuits for inkjet print heads. However, the method and the apparatus described according to the invention can be used in any field of technology related to optical metrology for the determination of the three-dimensional topography of microscopic orifices in either a truncated cone or similar configuration.

Once having been sufficiently described what the method and the apparatus of the present invention consist in accordance to the enclosed drawings, it is understood that any detail modification can be introduced as appropriate unless variations may alter the essence of the invention as summarised in the appended claims.

## Claims

1. Optical metrology method for determining the three-dimensional topography of an orifice, in particular for the measurement of micrometric, tapered nozzles and other similar devices (13), using illumination means (1) of the object to be analysed (14) and observation means (2) of the object to be analysed (14), which includes at least one camera (11), **characterised in that** it comprises an initial step for checking that the image plane (z) for said illumination means (1) coincides with the object plane for the observation means (2); the method further comprising the steps of:
- arranging the object to be analysed (14) on a microscope slide with the greater diameter opening facing the illumination means (1);
- centring one of the orifices (13) of the object to be analysed (14) in the field of view of the observation means (2);
- bringing into focus by means of wide-field illumination the smaller diameter opening of the orifice (13) to be analysed;
- measuring the diameter of the orifice as well as major defects such as the absence of an orifice or large-scale deformations;
- modifying the focus plane (zᵢ) of the inner part of the orifice (13) of the object (14) by changing it to another focus plane (zᵢ₊₁) ;
- measuring the contour of the orifice (13) in the focus plane (zᵢ₊₁) in order to determine the inner topography of the orifice (13) by projecting a sequence of patterns and measuring the position of the points of the contour of the orifice (13) when the images of the projected pattern and their reflection on the inner walls of the orifice (13) are superimposed on the plane of the camera (11);
- repeating the above process for a number of planes (zᵢ... zₙ) inside the orifice (13);
- processing the data for the contours measured in the different planes to obtain a three-dimensional geometrical representation of the inner topography of the orifice (13), as well as its characteristic parameters (maximum and minimum diameters of the orifice (13), slope of the wall of the orifice (13), deviations from nominal figure, position of the axis of the orifice (13), etc.).

2. Method as claimed in claim 1, **characterized in that** said sequence of patterns are circular patterns of a given, increasing radius.

3. Method as claimed in claim 1, **characterized in that** the points of the contour on the focus plane (zᵢ) are measured using a cylindrical coordinate system with a resolution of 360-720 points measured along the length of the contour of the orifice (13).

4. Method as claimed in claim 1, **characterized in that** a series of images ranging from 10 to 25 in number is acquired in order to obtain the points measured along the contour of the orifice (13).

5. Method as claimed in claim 1, **characterized in that** the spacing between focus planes (zᵢ) ranges from 1 to 10 *µ*m.

6. Method as claimed in claim 1, **characterized in that** the step of modifying the focus plane (zᵢ) of the object being analysed (14) by another focus plane (zᵢ₊₁) is repeated a given number of times to obtain values in just as many focus planes (zₙ) within the orifice (13) of the object (14), depending on the thickness of the object being analysed and the requirements of the analysis parameters.

7. Apparatus for determining three-dimensional topographies, in particular for measuring micrometric tapered nozzles and other, similar devices (13) according to the method as claimed in any of the preceding claims, **characterized in that** it comprises illumination means (1), observation means (2) and computer processing means (3), said illumination means (1) comprising a microscope objective (4) associated with said illumination means (1), a light source (5), a pattern representation system (6), and an optical system (8) associated with the illumination means (1); and said observation means (2) comprising a microscope objective (9) associated with the observation means (2), an optical system (10) associated with the observation means (2), and at least one camera (11, 18).

8. Apparatus as claimed in claim 7, **characterized in that** it includes a mirror (7) that deviates the light emitted from said light source at a certain angle (5) towards said optical system (8).

9. Apparatus as claimed in claim 8, **characterized in that** the angle of deviation of the light caused by the mirror (7) is 90°.

10. Apparatus as claimed in claim 7, **characterized in that** the objective (4) associated with the illumination means (1) is an 100X magnification SLWD objective (super-long working distance), whereas the objective (9) associated with the observation means (2) is a 50X magnification SLWD objective (super-long working distance), said camera (11) being a 1/3" camera.

11. Apparatus as claimed in claim 7, **characterized in that** said pattern representation system (6) is controlled by a computer (12) that forms part of said computer processing means (3) and allows to both visualise a wide-field illumination and to generate circular patterns of different diameters, said patterns being projected by means of said objective (4) with said optical system (8) inside the orifice (13) of the object being analysed (14).

12. Apparatus as claimed in claim 7, **characterized in that** said pattern representation system is a liquid crystal microdisplay (LCD) (6).

13. Apparatus as claimed in claim 7, **characterized in that** said pattern representation system is a liquid-crystal-on-silicon (LCOS) microdisplay (16), and also includes a light beam splitter (17).

14. Apparatus as claimed in claim 7, **characterized in that** said light source (5) emits a broadband spectrum of light.

15. Apparatus as claimed in claim 7, **characterized in that** said light source (5) is a laser and the pattern on the inner surface of the orifice is generated using a scanner.

16. Apparatus as claimed in claim 7, **characterized in that** it includes an additional camera (18), said apparatus further including a light beam splitter (17').

17. Apparatus as claimed in claim 7, **characterized in that** said camera or cameras (11, 18) are CCD cameras.

18. Apparatus as claimed in claim 7, **characterized in that** said camera or cameras (11, 18) are CMOS cameras.
